# EUROPÄISCHE PATENTANMELDUNG

(11) **EP 2 982 879 A1**
(43) Veröffentlichungstag der Anmeldung: **10.02.2016**
(21) Anmeldenummer: 15178752.0
(22) Anmeldetag: 29.07.2015
(51) Int. Cl.: F16C 35/06, F16C 35/07, F16C 35/073, F16C 35/077, F16C 33/08, F16C 33/14

(54) **LAGERRING, LAGERANORDNUNG UND VERFAHREN ZUM FIXIEREN EINES LAGERRINGS AN EINER WELLE ODER AN EINEM GEHÄUSE**

(30) Priorität: 04.08.2014 DE 102014215347
(71) Anmelder: Aktiebolaget SKF, 415 50 Göteborg (SE)
(72) Erfinder: von Schleinitz, Thilo, 97422 Schweinfurt (DE)
(74) Vertreter: Kuhstrebe, Jochen

(57) **Zusammenfassung**

Die Erfindung betrifft einen Lagerring (5) mit einer Sitzfläche (8) zum Befestigen des Lagerrings (5) an einer benachbarten Gegenfläche (9) einer Welle (1) oder eines Gehäuses (2), wobei auf der Sitzfläche (8) eine mechanisch aufgebrachte Metallschicht (10) so ausgebildet ist, dass ein Teilbereich (15) der Sitzfläche (8) ohne Metallschicht (10) ausgebildet ist.

## Beschreibung

Die Erfindung betrifft einen Lagerring, eine Lageranordnung und ein Verfahren zum Fixieren eines Lagerrings an einer Welle oder an einem Gehäuse.

Bei der Montage eines Lagers ist es in der Regel erforderlich, die Lagerringe drehfest mit der Einbauumgebung zu fixieren. Beispielsweise können der Innenring des Lagers drehfest mit einer Welle und der Außenring des Lagers drehfest mit einem Gehäuse verbunden werden. Derartige drehfeste Verbindungen können beispielsweise durch Ausbildung eines Pressverbands erzeugt werden. Hierzu wird der Innenring mit einer radialen Überdeckung auf die Welle bzw. der Außenring mit einer radialen Überdeckung in die Gehäusebohrung gepresst. Zur Schonung der Bauteile können die Radialmaße für die Montage durch Erwärmen oder Abkühlen temporär verändert werden. Ebenso besteht die Möglichkeit, konische Hülsen einzusetzen, um auf einfache Weise hohe Radialkräfte zu erzeugen.

In der Regel ist die Belastbarkeit des Pressverbands umso größer, je höher die Presskräfte sind. Hohe Presskräfte haben jedoch auch eine hohe Beanspruchung der Lagerringe zur Folge und beeinflussen die Vorspannung des Lagers. Andererseits besteht bei zu geringen Presskräften das Risiko, dass es zu Mikrobewegungen der Lagerringe und in der Folge zu einer Schädigung der Kontaktflächen und zu Korrosion kommt.

Die Belastbarkeit des Pressverbands hängt nicht nur von der Höhe der Presskräfte, sondern auch von der Reibung zwischen dem Lagerring und der Einbauumgebung ab. In diesem Zusammenhang ist es bereits aus der DE 10 2012207927 A1 bekannt, Lagerringe vor der Montage mit einer Zinkschicht zu beschichten. Durch die Zinkschicht wird die Reibung zwischen den Lagerringen und der Einbauumgebung erhöht. Eine Beschichtung eines Lagerrings mit einer Zinkschicht ist jedoch auch mit Nachteilen verbunden. So kommt es beispielsweise bei einer vollflächigen Beschichtung von Wälzlagerringen zu einer unerwünschten Beschichtung der Laufbahnen, die sich beispielsweise negativ auf die Maßhaltigkeit und das tribologische Verhalten auswirken kann. Eine teilweise Beschichtung, bei der beispielsweise die Laufbahnen ausgespart bleiben, ist im Rahmen eines galvanischen Beschichtungsprozesses oder bei anderen Badprozessen mit einem hohen Aufwand verbunden. Bei sehr großen Lagerringen ist ein galvanischer Beschichtungsprozess mitunter gar nicht möglich.

Der Erfindung liegt die Aufgabe zugrunde, mit möglichst wenig Aufwand eine hochbelastbare Verbindung zwischen einem Lagerring und einer Welle oder einem Gehäuse auszubilden.

Diese Aufgabe wird durch die Merkmalskombinationen der nebengeordneten Ansprüche gelöst.

Die Erfindung betrifft einen Lagerring mit einer Sitzfläche zum Befestigen des Lagerrings an einer benachbarten Gegenfläche einer Welle oder eines Gehäuses, wobei auf der Sitzfläche eine mechanisch aufgebrachte Metallschicht so ausgebildet ist, dass ein Teilbereich der Sitzfläche ohne Metallschicht ausgebildet ist.

Die Erfindung hat den Vorteil, dass ein derart beschichteter Lagerring mit vergleichsweise wenig Aufwand hergestellt werden kann. Dabei reduziert sich der Aufwand beispielsweise gegenüber einer vollflächigen galvanischen Beschichtung der Sitzfläche sowohl durch das mechanische Aufbringen als auch durch das lediglich partielle Beschichten. Ein weiterer Vorteil besteht darin, dass der Lagerring sehr innig und dauerhaft mit der Welle oder mit dem Gehäuse verbunden werden kann. Insbesondere werden Mikrobewegungen zwischen dem Lagerring und der Welle oder dem Gehäuse soweit reduziert, dass es nicht zu Fretting Corrosion kommt.

Unter einer auf die Sitzfläche mechanisch aufgebrachten Metallschicht ist eine Metallschicht zu verstehen, die durch einen berührenden reibenden Kontakt eines Metallkörpers mit der Sitzfläche ausgebildet wird, indem Material vom Metallkörper mechanisch auf die Sitzfläche übertragen wird. Dabei wird die Materialübertragung durch die entstehende Reibungswärme thermisch unterstützt.

Der Lagerring kann als ein Wälzlagerring oder als ein Gleitlagerring ausgebildet sein. Weiterhin kann der Lagerring als ein Innenring oder als ein Außenring ausgebildet sein. Die Metallschicht kann Zink, Aluminium oder Kupfer aufweisen oder aus einem dieser Materialien bestehen.

Auf der Sitzfläche des Lagerrings können mehrere Metallschichten nebeneinander ausgebildet sein und zwischen den Metallschichten kann jeweils ein unbeschichteter Teilbereich ausgebildet sein. Dies hat den Vorteil, dass die Metallschichten lediglich dort aufgebracht werden können, wo sie benötigt werden und dadurch die Zeit für das Aufbringen gering gehalten werden kann. Ein weiterer Vorteil besteht darin, dass die insgesamt beschichtete Fläche klein gehalten werden kann und dadurch mit der gleichen Kraft ein höhere Flächenpressung im Bereich der Metallschichten bei einem späteren Einbau des Lagerrings erzeugt werden kann.

Der Lagerring kann brüniert sein. Dabei kann der Lagerring bereichsweise oder vollflächig brüniert sein. Insbesondere kann der Lagerring im Bereich seiner Laufbahn brüniert sein. Eine Brünierung des Lagerrings erhöht dessen Korrosionsbeständigkeit. Außerdem können durch eine Brünierung die tribologischen Eigenschaften im Bereich der Laufbahn verbessert werden.

Die Erfindung betrifft weiterhin eine Lageranordnung mit einem Lagerring, der eine Sitzfläche aufweist und einer Welle oder einem Gehäuse. Die Welle oder das Gehäuse weist eine zur Sitzfläche benachbarte Gegenfläche auf. Auf der Sitzfläche des Lagerrings oder auf der Gegenfläche der Welle oder des Gehäuses ist eine mechanisch aufgebrachte Metallschicht ausgebildet.

Außerdem betrifft die Erfindung ein Verfahren zum Fixieren eines Lagerrings an einer Welle oder an einem Gehäuse. Beim erfindungsgemäßen Verfahren wird der Lagerring in Rotation versetzt. Dann wird ein Metallkörper gegen eine Sitzfläche des rotierenden Lagerrings gepresst und dadurch eine Metallschicht auf der Sitzfläche des Lagerrings ausgebildet. Schließlich wird der Lagerring so an der Welle oder am Gehäuse angebracht, dass die Sitzfläche des Lagerrings und eine Gegenfläche der Welle oder des Gehäuses gegen die Metallschicht gepresst werden.

Die Rotationsbewegung des Lagerrings kann mit Hilfe einer Dreh- oder Schleifmaschine erzeugt werden, die auch bei der Fertigung des Lagerrings zum Einsatz kommen. Die Übertragung des Materials vom Metallkörper auf den Lagerring erfolgt durch Druck und Reibungshitze.

Der Lagerring kann vor der Ausbildung der Metallschicht brüniert werden.

Der Metallkörper kann während des Pressens gegen den Lagerring in eine Rotationsbewegung und/oder in eine Oszillationsbewegung versetzt werden. Insbesondere kann der Lagerring in eine Rotationsbewegung um seine Längsachse und/oder in eine Oszillationsbewegung parallel zur Rotationsachse des Lagerrings versetzt werden.

Die Metallschicht kann so auf der Sitzfläche des Lagerrings ausgebildet werden, dass ein Teilbereich der Sitzfläche ausgespart bleibt. Insbesondere können auf der Sitzfläche nebeneinander mehrere Metallschichten ausgebildet werden, zwischen denen jeweils ein Teilbereich ausgespart bleibt.

Der Lagerring und die Welle oder das Gehäuse können über die für das Positionieren des Lagerrings benötigte Bewegung hinaus anfänglich relativ zueinander bewegt werden. Durch diese Bewegung kann die Metallschicht verformt, in das Rauheitsprofil der Welle oder des Gehäuses eingepresst und verschweißt werden und dadurch eine sehr innige Verbindung mit der Gegenfläche ausgebildet werden. Insbesondere kann eine stoffschlüssige Verbindung ausgebildet werden.

Die Erfindung wird nachstehend anhand der in der Zeichnung dargestellten Ausführungsbeispiele erläutert.

Es zeigen:
- Figur 1: ein Ausführungsbeispiel einer erfindungsgemäß ausgebildeten Lageranordnung in einer schematischen Schnittdarstellung und
- Figur 2: ein Ausführungsbeispiel einer Anordnung zur Ausbildung der Metallschicht auf der Sitzfläche des Außenrings in einer schematischen Darstellung.

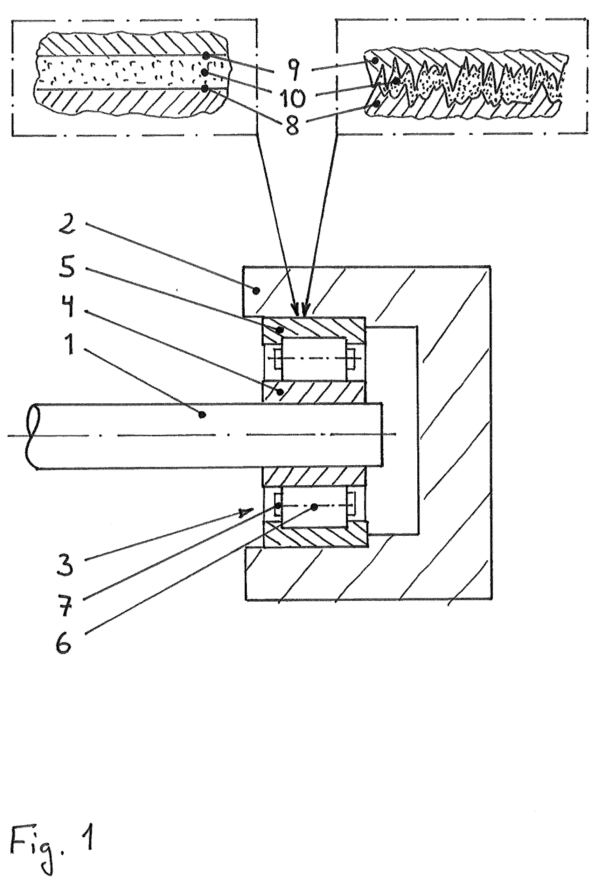

Figur 1 zeigt eine erfindungsgemäß ausgebildete Lageranordnung in einer schematischen Schnittdarstellung. Die Lageranordnung dient der drehbaren Lagerung einer Welle 1 relativ zu einem Gehäuse 2 mittels eines Wälzlagers 3 oder eines sonstigen Lagers. Das Wälzlager 3 weist einen Innenring 4, einen Außenring 5 und Wälzkörper 6 auf. Die Wälzkörper 6 können in einem Käfig 7 geführt sein und zwischen dem Innenring 4 und dem Außenring 5 abrollen. Der Außenring 5 kann vollflächig oder lediglich im Bereich seiner Laufbahn brüniert sein. Entsprechendes gilt auch für den Innenring 4. Die Wälzkörper 6 können ebenfalls brüniert sein.

Der Innenring 4 ist drehfest mit der Welle 1 und der Außenring 5 drehfest mit dem Gehäuse 2 verbunden. Im Folgenden wird die drehfeste Verbindung zwischen dem Außenring 5 und dem Gehäuse 2 näher erläutert. Die drehfeste Verbindung zwischen dem Innenring 4 und der Welle 1 kann in analoger Weise ausgebildet sein.

Zur Ausbildung der drehfesten Verbindung weist der Außenring 5 eine Sitzfläche 8 auf, die radial gegen eine Gegenfläche 9 des Gehäuses 2 gepresst wird. Bei der Sitzfläche 8 handelt es sich um eine Mantelfläche des Außenrings 5. Bei der Gegenfläche 9 handelt es sich um eine Bohrungsfläche des Gehäuses 2. Abhängig von den Rauheitsprofilen der Sitzfläche 8 und der Gegenfläche 9 sowie von der Dicke der Metallschicht 10 stehen die Sitzfläche 8 und die Gegenfläche 9 nicht oder lediglich im Bereich besonders erhabener Stellen der Rauheitsprofile in einem direkten berührenden Kontakt zueinander und sind in den übrigen Bereichen über eine dazwischen angeordnete Metallschicht 10 miteinander verlötet.

In der links dargestellten Ausschnittsvergrößerung sind die Sitzfläche 8 des Außenrings 5 und die Gegenfläche 9 des Gehäuses 2 vergleichsweise glatt ausgebildet. Folglich sind die Sitzfläche 8 und die Gegenfläche 9 durch die Metallschicht 10 deutlich voneinander getrennt.

In der rechts dargestellten Ausschnittsvergrößerung weisen die Sitzfläche 8 des Außenrings 5 und die Gegenfläche 9 des Gehäuses 2 jeweils ein ausgeprägtes Rauheitsprofil auf. Da die Metallschicht 10 zudem vergleichsweise dünn ausgebildet ist, greifen die Rauheitsprofile trotz der dazwischen angeordneten Metallschicht 10 ineinander.

Bei der Metallschicht 10 kann es sich um eine Schicht aus Zink, Aluminium oder Kupfer handeln. Über die Lötverbindung sind die Sitzfläche 8 und die Gegenfläche 9 sehr innig und dauerhaft miteinander verbunden.

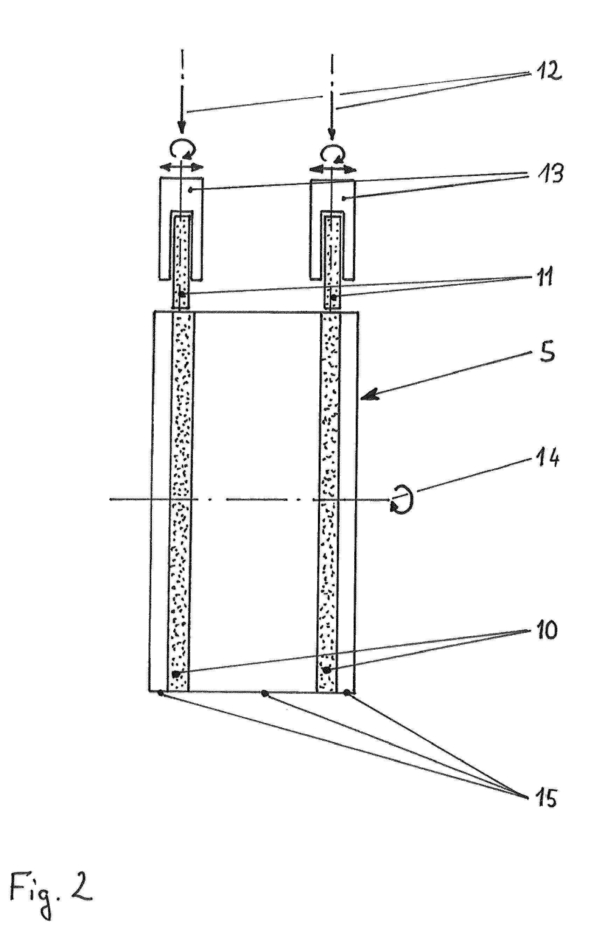

Die Metallschicht 10 kann insbesondere auf den Außenring 5 aufgebracht sein und lediglich einen Teilbereich der Sitzfläche 8 bedecken. Insbesondere können mehrere Metallschichten 10 axial nebeneinander auf der Sitzfläche 8 aufgebracht sein, zwischen denen unbeschichtete Bereiche ausgebildet sind. Die Ausbildung einer oder mehrere Metallschichten 10 auf der Sitzfläche 8 wird im Folgenden anhand von Figur 2 erläutert.

Figur 2 zeigt eine Anordnung zur Ausbildung der Metallschicht 10 auf der Sitzfläche 8 des Außenrings 5 in einer schematischen Darstellung.

Die Anordnung weist zwei stiftförmige Metallkörper 11 mit je einer Längsachse 12 auf, die ganz oder teilweise aus Zink bestehen können. Ebenso ist es auch möglich, dass die Metallkörper 11 ganz oder teilweise aus Kupfer oder aus Aluminium bestehen. Anstelle von zwei Metallkörpern 11 können auch drei oder mehr Metallkörper 11 vorgesehen werden. Ebenso ist es auch möglich, lediglich einen Metallkörper 11 vorzusehen. Jeder Metallkörper 11 ist in einer Führung 13 gehalten.

Der Außenring 5 wird zur Durchführung des erfindungsgemäßen Verfahrens in eine Rotationsbewegung um seine Rotationsachse 14 versetzt. Jeder Metallkörper 11 wird in eine Rotationsbewegung um seine Längsachse 12 versetzt und ggf. zusätzlich in einer Richtung parallel zur Rotationsachse 14 des Außenrings 5 oszilliert. Danach wird der Metallkörper 11 dem Außenring 5 angenähert bis er berührend an der Sitzfläche 8 des Außenrings 5 anliegt. Dann wird der Metallkörper 11 fest gegen die Sitzfläche 8 des Außenrings 5 gepresst. Der Anpressdruck wird dabei so hoch gewählt, dass der Metallkörper 11 infolge der Reibung im Kontaktbereich mit der Sitzfläche 8 des Außenrings 5 stark erhitzt wird und es beim Metallkörper 11 zu einem Materialabrieb kommt. Da das Material des Außenrings 5 wesentlich härter ist als das Material des Metallkörpers 11, ist der Materialabrieb nahezu vollständig auf den Metallkörper 11 beschränkt. Beim Außenring 5 kommt es nicht zu einem nennenswerten Materialabrieb.

Der Materialabrieb des Metallkörpers 11 haftet an der Sitzfläche 8 des Außenrings 5 an und bildet dort durch eine lötähnliche plastische Aufschmierung die Metallschicht 10 aus. Infolge der Rotation des Außenrings 5 hat die Metallschicht

10 die Form eines ringförmig umlaufenden Streifens. Die Mindestbreite des Streifens ist durch die Breite des Kontaktbereichs zwischen dem Metallkörper 11 und der Sitzfläche 8 des Außenrings 5, durch die Oszillationsbewegung des Metallkörpers 11 und je nach Geometrie auch durch die Rotationsbewegung des Metallkörpers 11 festgelegt. Durch Verschieben des Metallkörpers 11 in Axialrichtung des Außenrings 5 können Position und Breite des Streifens variiert werden.

Der Metallkörper 11 wird insbesondere so angesteuert, dass ein Teilbereich 15 oder mehrere Teilbereiche 15 der Sitzfläche 8 nicht beschichtet werden. Abhängig von der Ansteuerung des Metallkörpers 11 wird eine Metallschicht 10 ausgebildet oder es werden mehrere Metallschichten 10 nebeneinander ausgebildet. Nach dem Ausbilden der ersten Metallschicht 10 wird der Metallkörper 11 von der Sitzfläche 8 des Außenrings 5 abgehoben. Dabei wird darauf geachtet, dass die Metallschicht 10 nicht lokal verdickt ausgebildet wird. Danach wird der Metallkörper 11 zu der Position weiterbewegt, an der eine weitere Metallschicht 10 ausgebildet werden soll und gegen die Sitzfläche 8 des Außenrings 5 gepresst. Falls keine weitere Metallschicht 10 ausgebildet werden soll, wird der Metallkörper 11 in eine Parkposition bewegt.

Beim dargestellten Ausführungsbeispiel werden auf der Sitzfläche 8 des Außenrings 5 zwei streifenförmig umlaufende Metallschichten 10 ausgebildet. Die beiden Metallschichten 10 sind in einem Abstand axial nebeneinander angeordnet, so dass zwischen den Metallschichten 10 ein unbeschichteter Teilbereich 15 verbleibt. Weiterhin ist je eine der Metallschichten 10 in der Nähe je eines axialen Endes des Außenrings 5 angeordnet, wobei jeweils ein unbeschichteter Teilbereich 15 zwischen den axialen Enden und der jeweils nächstliegenden Metallschicht 10 ausgebildet ist.

Alternativ zu dem in Figur 1 dargestellten Ausführungsbeispiel ist es beispielsweise auch möglich, lediglich eine einzige Metallschicht 10 auszubilden. Diese Metallschicht 10 kann beispielsweise mittig zwischen den axialen Enden des Außenrings 5 angeordnet sein. Die Anordnung der Metallschicht 10 bzw. der Metallschichten 10 kann insbesondere vom Lagertyp abhängig gemacht werden, für den der Außenring 5 vorgesehen ist. Dabei kann beispielsweise darauf geachtet werden, dass die Lastzone des Außenrings 5 durch die Metallschicht unterstützt wird.

Aus dem auf die vorstehend beschriebene Weise beschichteten Außenring 5 und weiteren Komponenten wird das Wälzlager 3 hergestellt. Das Wälzlager 3 wird in das Gehäuse 2 eingepresst, so dass die Metallschicht 10 und die Gegenfläche 9 des Gehäuses 2 gegeneinander gepresst werden. Durch das Einpressen des Wälzlagers 3 in das Gehäuse 2 und ggf. durch weitere Relativbewegungen (Trainieren) zwischen dem Wälzlager 3 und dem Gehäuse 2 kommt es zu einer Lötverbindung zwischen der Sitzfläche 8 des Außenrings 5 und der Gegenfläche 9 des Gehäuses 2, bei der die Metallschicht 10 das Lot darstellt. Diese Lötverbindung hält hohen Drehmomenten Stand und verhindert dauerhaft ein Wandern des Außenrings 5 sowie die Entstehung von Reibrost durch Mikrobewegungen.

Bei einer Abwandlung der Erfindung wird die Metallschicht 10 auf der Gegenfläche 9 des Gehäuses 2 oder der Welle 1 ausgebildet.

### Bezugszeichen

- 1: Welle
- 2: Gehäuse
- 3: Wälzlager
- 4: Innenring
- 5: Außenring
- 6: Wälzkörper
- 7: Käfig
- 8: Sitzfläche
- 9: Gegenfläche
- 10: Metallschicht
- 11: Metallkörper
- 12: Längsachse
- 13: Führung
- 14: Rotationsachse
- 15: Unbeschichteter Teilbereich

## Patentansprüche

1. Lagerring mit einer Sitzfläche (8) zum Befestigen des Lagerrings (5) an einer benachbarten Gegenfläche (9) einer Welle (1) oder eines Gehäuses (2), wobei auf der Sitzfläche (8) eine mechanisch aufgebrachte Metallschicht (10) so ausgebildet ist, dass ein Teilbereich (15) der Sitzfläche (8) ohne Metallschicht (10) ausgebildet ist.

2. Lagerring nach Anspruch 1, wobei auf der Sitzfläche (8) des Lagerrings (5) mehrere Metallschichten (10) nebeneinander ausgebildet sind und zwischen den Metallschichten (10) jeweils ein unbeschichteter Teilbereich (15) ausgebildet ist.

3. Lagerring nach einem der vorhergehenden Ansprüche, wobei der Lagerring (5) brüniert ist.

4. Lageranordnung mit einem Lagerring (5), der eine Sitzfläche (8) aufweist und einer Welle (1) oder einem Gehäuse (2), wobei die Welle (1) oder das Gehäuse (2) eine zur Sitzfläche (8) benachbarte Gegenfläche (9) aufweist und wobei auf der Sitzfläche (8) des Lagerrings (5) oder auf der Gegenfläche (9) der Welle (1) oder des Gehäuses (2) eine mechanisch aufgebrachte Metallschicht (10) ausgebildet ist.

5. Lageranordnung nach Anspruch 4, wobei der Lagerring (5) gemäß einem der Ansprüche 1 bis 3 ausgebildet ist.

6. Verfahren zum Fixieren eines Lagerrings (5) an einer Welle (1) oder an einem Gehäuse (2), wobei
- der Lagerring (5) in Rotation versetzt wird,
- ein Metallkörper (11) gegen eine Sitzfläche (8) des rotierenden Lagerrings (5) gepresst wird und dadurch eine Metallschicht (10) auf der Sitzfläche (8) des Lagerrings (5) ausgebildet wird und
- der Lagerring (5) so an der Welle (1) oder am Gehäuse (2) angebracht wird, dass die Sitzfläche (8) des Lagerrings (5) und eine Gegenfläche (9) der Welle (1) oder des Gehäuses (2) gegen die Metallschicht (10) gepresst werden.

7. Verfahren nach Anspruch 6, wobei der Lagerring (5) vor der Ausbildung der Metallschicht (10) brüniert wird.

8. Verfahren nach einem der Ansprüche 6 oder 7, wobei der Metallkörper (11) während des Pressens gegen den Lagerring (5) in eine Rotationsbewegung und/oder in eine Oszillationsbewegung versetzt wird.

9. Verfahren nach einem der Ansprüche 6 bis 8, wobei die Metallschicht (10) so auf der Sitzfläche (8) des Lagerrings (5) ausgebildet wird, dass ein Teilbereich (15) der Sitzfläche (8) ausgespart bleibt.

10. Verfahren nach einem der Ansprüche 6 bis 9, wobei der Lagerring (5) und die Welle (1) oder das Gehäuse (2) über die für das Positionieren des Lagerrings (5) benötigte Bewegung hinaus anfänglich relativ zueinander bewegt werden.
